# EUROPEAN PATENT APPLICATION

(11) **EP 1 517 464 A2**
(43) Date of publication of application: **23.03.2005**
(21) Application number: 04020609.6
(22) Date of filing: 31.08.2004
(51) Int. Cl.: H04H 1/00, H04L 12/28

(54) **Digital audio distribution system**

(30) Priority: 03.09.2003 US 500055 P; 12.12.2003 US 734706; 08.01.2004 US 754912
(71) Applicant: Phoenix Gold International, Inc., 9300 North Decatur Portland, OR 97203 (US)
(72) Inventor: Devin, Craig, c/o Devin Design & Development, 90277 Redondo Beach, CA (US); White, Dorian, 90025 Los Angeles, CA (US); Williams, Steve Phoenix Gold International, Inc., 97203 Portland, OR (US); MacBeth, Roland c/o Phoenix Gold Intern.,Inc., 97203 Portland, OR (US)
(74) Representative: Lang, Johannes, Dipl.-Ing.

(57) **Abstract**

A digital audio distribution network includes a hub configured to receive analog or other audio signals from one or more audio sources. The hub includes analog-to-digital converters that produce digital audio signals and a remote control input that receives control data from a remote control device. An audio processor combines the digital audio signals and the control data for delivery to one or more audio zones as a digital audio distribution signal. The audio processor also receives a digital audio distribution signal and produces an analog audio signal for delivery to one or more speakers. The audio processor also decodes control data from the input digital audio distribution signal and directs the decoded control data to an infrared repeater. The hub also delivers electrical power to additional network hubs or other network elements using a cable that also conducts one or more digital audio distribution signals. A remote control processor is configured to learn additional remote control commands, and a serial interface is provided for network configuration and troubleshooting.

## Description

### TECHNICAL FIELD

The disclosure pertains to digital audio distribution systems.

### BACKGROUND

Residential audio systems typically provide audio content from a variety of sources. A typical system offers AM/FM radio, analog and digital audio tape, compact discs, and a variety of digital file formats. Thus, audio system users have available a broad spectrum of audio materials. Audio systems adapted to this variety of audio sources can require corresponding components such as AM/FM tuners, CD players, satellite television or set top box audio feeds, DVD audio, SuperCD format, computer streamed audio from the internet, etc, and can be large and expensive. In addition, system users frequently customize audio installations for a particular setting to, for example, accommodate room acoustics or permit convenient selection of favorite audio sources.

While sophisticated, versatile audio components are available, system users still encounter significant difficulties in obtaining the intended audio programming. Audio components are typically situated in and configured for a particular location, and require the user to remain in this location to enjoy the intended audio programming. In addition, sophisticated audio components can represent a considerable expense, and users are typically unwilling to configure additional audio components for other locations. Thus, while an audiophile may have a state-of-the-art audio system in a designated area in her residence, she typically must still resort to listening to a portable audio system or lower fidelity component such as a clock radio or intercom equipped with CD player or FM tuner boom box while in other areas. Therefore, methods and systems for audio distribution are needed.

### SUMMARY

Digital audio networks comprise a hub configured to receive a plurality of stereo signals and combine the stereo signals with control data to produce a digital audio network signal. An output connector is configured to communicate the digital audio network signal from the hub to additional network elements downstream or upstream along an output cable. In representative examples, the output connector is also configured to deliver electrical power to the output cable in accordance with, for example, standard IEEE 802.3AF usage guidelines. In additional examples, the output connector is configured to deliver the digital audio network signal to a first pair of conductors in the output cable and electrical power to at least a second pair of conductors in the output cable. In representative examples, the output connector is configured to deliver the digital audio network signal to a first pair of conductors in a CAT 5 cable, and to deliver electrical power to at least a second pair of conductors in the CAT 5 cable. In additional examples, the hub includes an input connector configured to receive a digital audio network signal. In additional examples, an infra-red control input is configured to receive the control data. In further examples, a digital signal processor is configured to process stereo audio data associated with at least one of the stereo signals.

Controllers for a digital audio network comprise a keypad configured for entry of at least one audio source identifier or configuration parameter for at least one audio playback output or a plurality of output locations grouped as a zone. An audio processor is configured to receive an input digital audio distribution signal that includes digital audio data and control data, and produce an output digital audio distribution signal based on the entry of the at least one audio source identifier or configuration parameter. In specific examples, a display is configured to display the at least one audio source identifier or configuration parameter. In other examples, an infrared sensor is configured to receive control data from a modulated infrared emitter and the audio processor is configured to include the control data from the modulated infrared emitter in the output digital audio distribution signal.

Audio network devices comprise an infrared sensor configured to receive control data from a modulated infrared emitter, and an audio processor configured to produce a digital audio distribution signal based on the received control data. In representative examples, an input is configured to receive at least one audio input signal, wherein the audio processor is configured to produce a digital audio signal based on the input audio signal, and the digital audio distribution signal is based on the digital audio signal. In additional examples, a user input is configured to select at least one audio signal to be decoded from the digital audio distribution signal. In further examples, a tone generator is configured to produce an audio tone, wherein the audio processor is configured to include the audio tone in the digital audio distribution signal. In additional examples, an input audio transducer is in communication with the audio processor and configured to generate an audio signal. The audio processor is configured to include the audio signal generated by the input audio transducer in the digital audio distribution signal.

Audio distribution methods comprise receiving at least one audio signal from an audio signal source and digitizing the at least one audio signal to produce a digital audio signal. The digital audio signal is combined with control data associated with the audio signal source to produce a digital audio distribution signal. In additional examples, the control data is received from a remote control device. In other examples, the digital audio distribution signal is transmitted to an audio zone. An analog audio signal is extracted from the digital audio distribution signal, and the extracted analog signal is delivered to an audio output device. In other examples, the extracted analog signal is configured based on the control data.

Audio distribution methods comprise receiving a plurality of digital audio signals and receiving control data. A digital audio distribution signal is produced based on a combination of selected digital audio signals and the control data. In other examples, the digital audio distribution signal is transmitted and the control data is extracted from the digital audio distribution signal and delivered to at least one audio source. In additional examples, the control data is associated with at least one of source volume, loudness, or muting. This control data is separated and routed to an on-board microprocessor for interpretation, routing and digital signal processing control functions. In other examples, the control data is associated with identification of a particular digital audio signal for delivery to a selected zone. In other representative examples, the method includes delivering electrical power with the transmitted digital audio distribution signal.

In additional examples, systems are configured to recognize previously undefined control commands received from, for example, an IR remote control, notify a system user of such receipt, and initiate a programming or "learning" sequence to associate a selected function with the undefined command, thereby defining the command. A remote control processor can be included that is in communication with a library of commands, or that can process new commands that are not in the command library. In other examples, network elements are configured to include program material in a digital audio distribution signal, and to recognize control commands to be executed remotely for inclusion in the digital audio distribution signal. In other examples, a communication interface is provided for communication with an external device such as a PDA or a personal computer or a touch panel controller for network installation, maintenance, and updates.

These and other features and advantages are described below with reference to the accompanying drawings.

### BRIEF DESCRIPTION OF THE DRAWINGS

FIG. 1 is schematic diagram of a digital audio distribution network.
FIG. 2A is schematic diagram of connection panel for a digital audio distribution network hub.
FIG. 2B is a schematic block diagram of an eight stereo channel digital audio distribution network hub.
FIG. 3 is schematic diagram of a portion of a network hub illustrating analog-to-digital conversion of two stereo audio signals.
FIGS. 4A(1)-4A(3) contain a schematic diagram of a portion of a network hub configured to receive digitized stereo audio signals and produce a digital audio network distribution signal that includes digital audio data for a plurality of stereo sources and control data associated with control of the stereo sources.
FIG. 4B is a schematic diagram of a portion of a network hub that includes status inputs for a plurality of audio sources and output connections for IR emitters associated with control of audio sources and network elements.
FIG. 5 is a schematic diagram of a portion of a network hub configured to produce analog audio signals based on digital audio signals received from a digital signal processor.
FIGS. 6A-6C contain a schematic diagram of a keyboard module for a digital audio distribution network.
FIGS. 7A-7B are schematic diagrams of front panels of representative user control modules.
FIG. 8 is a schematic diagram of a front panel of a remote power module.
FIG. 9 is a schematic diagram of a front panel of an input/output module.
FIGS. 10A(1)-10A(3) is a schematic diagram of user control module that includes a processor configured to learn remote control commands and a serial interface.
FIG. 10B is a block diagram illustrating processing of command received from a remote control.
FIG. 11 is a schematic diagram of a digital audio distribution network arranged in a point-to-point configuration.
FIG. 12 is a schematic diagram of a digital audio distribution network arranged in a star configuration.
FIG. 13 is a schematic diagram of another representative digital audio distribution network.
FIGS. 14A-14C contain a schematic diagram of a hub that includes a serial interface and a processor configured to learn control commands.
FIGS. 15A-15B contain a schematic diagram of a keypad module configured to communicate with a digital signal processor.
FIG. 16 is a schematic diagram of an IR output module configured to control IR emitters based on a processed IR signal.

### DETAILED DESCRIPTION

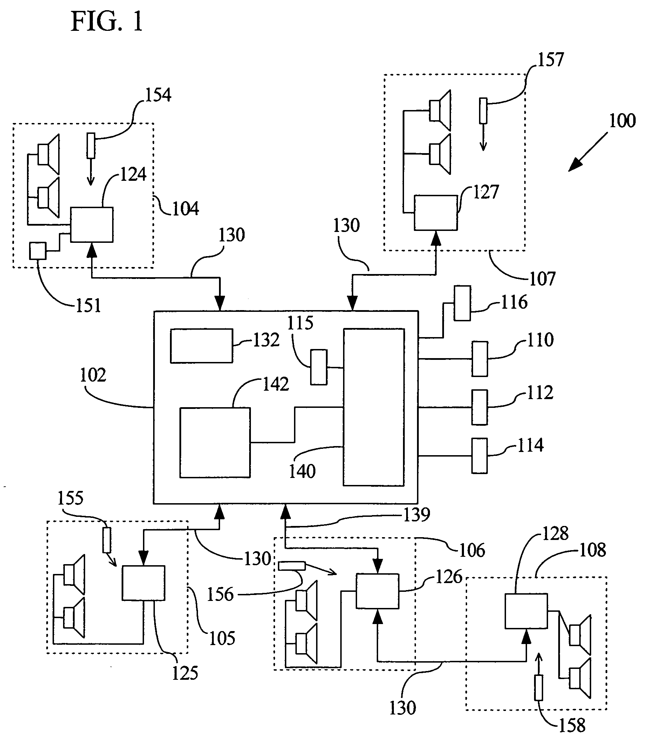

With reference to FIG. 1, a representative audio distribution network 100 includes a hub 102 configured to communicate with representative zones 104-108. The hub 102 is configured to receive audio signals and other signals from external sources 110, 112, 114 such as, for example, CD players, DVD players, tuners, satellite decoders, intercom systems, alarm systems, intercoms microphones, etc. The hub 102 can be configured to accept, for example, sixteen audio data channels (eight stereo sources) as inputs, and can transmit eight audio data channels (four stereo sources) to the zones 104-108, but fewer or more channels can be provided. The zones 104-108 are typically associated with areas in which audio signals are to be received. In a residential installation, the zones can correspond to various rooms in a residence (media room, dining room, family room) or locations (deck, pool, workshop, back yard). One or more audio sources such as a representative source 115 can be included in the hub 102, and digital audio sources such as a representative digital source 116 can be used. In addition, sources can be situated in one or more zones such as a source 151 situated in the zone 104.

As shown in FIG. 1, the zones 104-108 are provided with digital audio distribution (DAD) processors 124-128, respectively, that are interconnected with cables 130, typically so-called Category 5 ("Cat 5") cable. Cat 5 cables include eight conductors arranged in four pairs of conductors. As described below, the DAD processors of the zones can be different, and DAD processors can be connected via another DAD processor to the hub 102 or to other hubs. The DAD processors are typically configured to receive a digital audio distribution signal and decode/encode digital audio signals and control data as described below.

The hub 102 also receives and routes infrared remote (IR) or other control information from remote controllers 154-158 in the zones 104-108, respectively, to and from system components such as the DAD processors 124-128 and the sources 110, 112, 114, 116, 151. The IR information is typically transmitted as control data packets that are combined with digital audio signals for full duplex or bi-directional delivery over the cables 130. For example, a DAD processor in a selected zone can be configured to receive a command from an infrared or other wireless remote controller, and deliver the command to the hub 102. In this manner, users can control remote sources as well as control other DAD network elements.

The hub 102 also includes a power supply 132 configured to provide power to the digital audio distribution system via the cables 130. In a representative example, the power supply is configured to operate with input voltages of between about 90 VAC to 260 VAC and produce an output of about 24 VDC at 2.5 Amps.

A digital audio processor 140 is configured to receive analog audio signals from the sources 110, 112, 114 and produce corresponding digital signals. In a representative example, the processor 140 is based on a so-called ADAT chipset available from ALESIS SEMICONDUCTOR and is configured to convert the eight channels of analog input (four stereo pairs) to a single digital signal, typically a 24-bit, 48 kHz digital signal. Operation of this chipset is described in U.S. Patent 5,297,181. The processor 140 also receives IR information and other control information, and combines the control information with the digital audio signal. The combined audio/control signal is transmitted over a pair of conductors, and return (or duplex) information is received on a second pair of conductors. Power (e.g., 24 VDC) and ground are carried on the third and fourth pair of conductors, respectively. The hub 102 is also configured to sense input signal voltages that can be used to verify the status of a source component as ON or OFF based on, for example, detecting that a signal is present for greater than 2 seconds.

The digital audio processor 140 is configured to implement digital signal processing to provide user-selectable and customizable audio processing. The hub 102 and the digital audio processor 140 can be configured to provide user-selectable audio or control functions such as Auto Level in which audio signal amplitudes of signals from different sources are adjusted via intelligent compression. Auto Loudness can also be selected in which magnitudes of audio signal portions in selected frequency bands, typically low and high frequency bands, are adjusted based on an audio volume level. Typically, low and high frequency signal components are increased at low audio volume levels. Multi-band parametric equalization can also be provided in which, for example, parameters for five frequency bands can be selected for parametric equalization for a selected zone or zones. The frequency bands can be user-selectable, and adjustable boost/cut and "Q" can be provided at selected frequencies or frequency bands. Muting during power up/power down, and temporary muting for one or more selected zones can also be provided.

The hub 102 can be configured to have a default configuration such as, for example, a power-on configuration. In addition, the hub 102 can include a display 142 and an input interface for controlling and configuring audio delivery for one or more of the zones. For example, upon initialization, audio inputs 1-4 can be identified in the display 142 as INPUT1-INPUT4, respectively. During a configuration process, the inputs can be assigned other names such as "CD Player," "Tuner," "Tape," or other names. These assignments can be stored for display in subsequent system initializations. These assignments can also be displayed by DAD network elements situated in other zones by combining name assignment data with audio data in the digital audio distribution signal.

The hub 102 can also include a tone generator and can be configured to receive an alarm signal or to be in communication with a doorbell switch. In response to the alarm signal or the doorbell switch, a tone generated by the tone generator can be delivered to one or more zones and to override previously selected programming. In addition, intercom components can be included in the network 100 for operation under control of the hub 102.

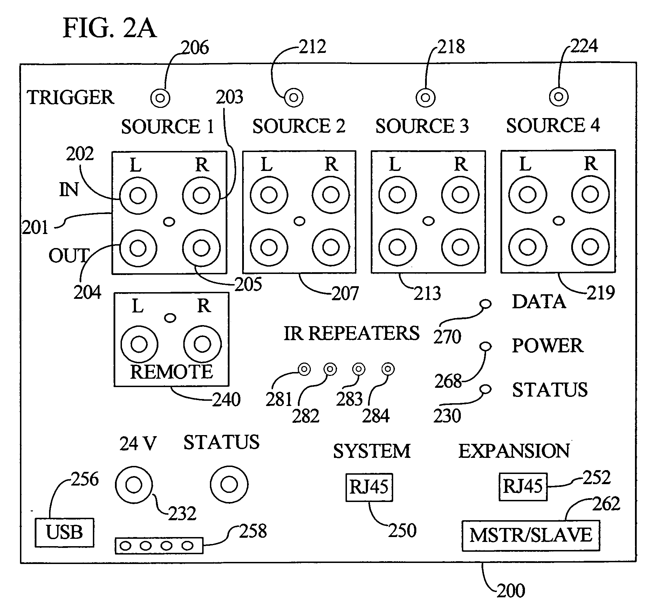

With reference to FIG. 2A, connections to a hub such as the hub 102 can be provided with a connection panel 200 that includes source modules 201, 207, 213, 219 that are configured to receive and output stereo audio signals as left/right (L/R) pairs. The source module 201 includes a left input connector 202, a right input connector 203, and associated L/R output connectors 204, 205, respectively. Various connector types can be used, but in one example, so-called RCA connectors are used. The source modules 207, 213, 219 can be similarly configured. The source modules 201, 207, 213, 219 are associated with respective trigger inputs 206, 212, 218, 224 that are configured to receive "trigger signals" that indicate that the associated source is turned on. In addition, the source module inputs are sampled by a digital audio processor to determine if the associated audio input pair is active (i.e., is receiving audio), and a STATUS LED 272 is used to indicate if any source module inputs are active. A determination of activity can be based on, for example, presence of an audio signal for a predetermined interval, such as 2 seconds. The panel 200 includes a coaxial connector 232 or other connector that can be configured to receive electrical power from an external power supply.

A remote source module 240 includes left and right output connectors 242, 244 and can be associated with a selected source module to provide, for example, subwoofer output or speaker output, or to receive a mono output associated with a stereo input. An RJ45 connector 250 is configured to communicate audio data and control data in a digital audio distribution signal and electrical power to and from additional network components located in one or more zones. An additional RJ45 connector 252 is provided for expansion or connection to a digital bus. A universal serial bus (USB) port 256 can also be provided for software revisions or for network control. A 4-conductor connector 258 is provided for a remote IR receiver for zones for which a system controller is unavailable. A master/slave switch 262 can be configured to select a selected hub as an originating source for a system clock. A green LED 268 is configured to indicate that power is available to the hub, a red LED 270 is configured to indicate data transmission on all RJ45 connections, and the blue LED 272 is configured to indicate that a voltage is present at a Status Input, typically 5-15 VDC. Connectors 281-284 are configured to receive infrared repeaters for transmission of IR-controller based commands. The connectors are typically 3.5 mm phone jacks, but other types of connector can be used. These IR repeaters are generally wired in parallel.

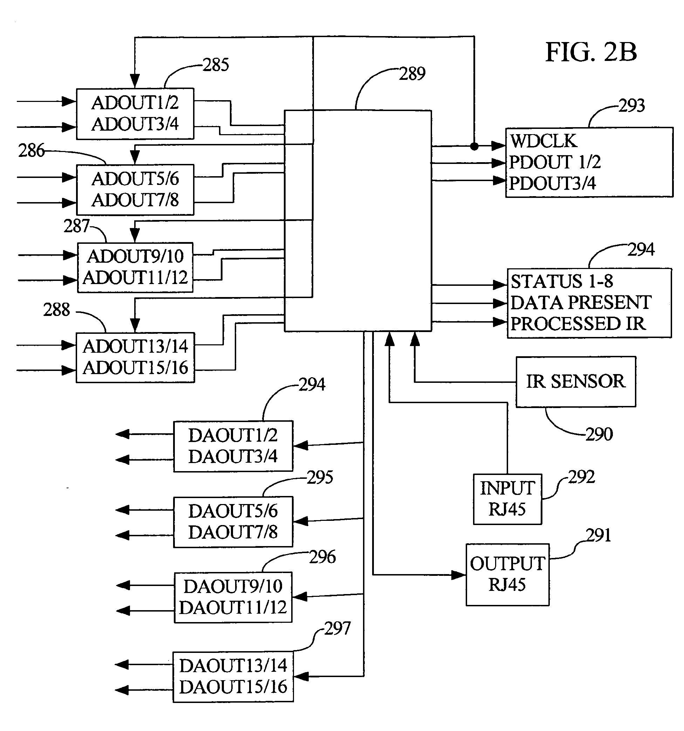

With reference to FIG. 2B, a hub configured for eight stereo sources (sixteen mono channels) typically includes A-D converters 285-288 that are configured to receive two analog stereo inputs and produce corresponding stereo digital signals that are delivered to a controller 289. The stereo digital signals typically include both left and right channel audio in a single digital signal. The controller 289 is configured to receive network control commands or commands associated with audio or other sources via an infrared sensor unit 290 that can be configured to receive commands from a conventional IR remote controller. The controller 289 combines the stereo digital signals with control data and delivers to produce a digital audio network signal that is delivered to an output 291. The controller 289 is also configured to receive a digital audio network signal from an input 292 and to produce processed audio signals and a word clock signal that are delivered to a processed audio output 293. Operation of the hub is indicated with an LED display panel 294 that indicates audio channel status and the presence of audio data, as well as producing an IR signal based on a processed IR signal produced by the controller 289. Analog stereo output signals are produced by D-A converters 294-297 and can be based on audio signals provided to the A-D converters 285-289 or on audio signals associated with a digital audio network signal received at the input 292, or both.

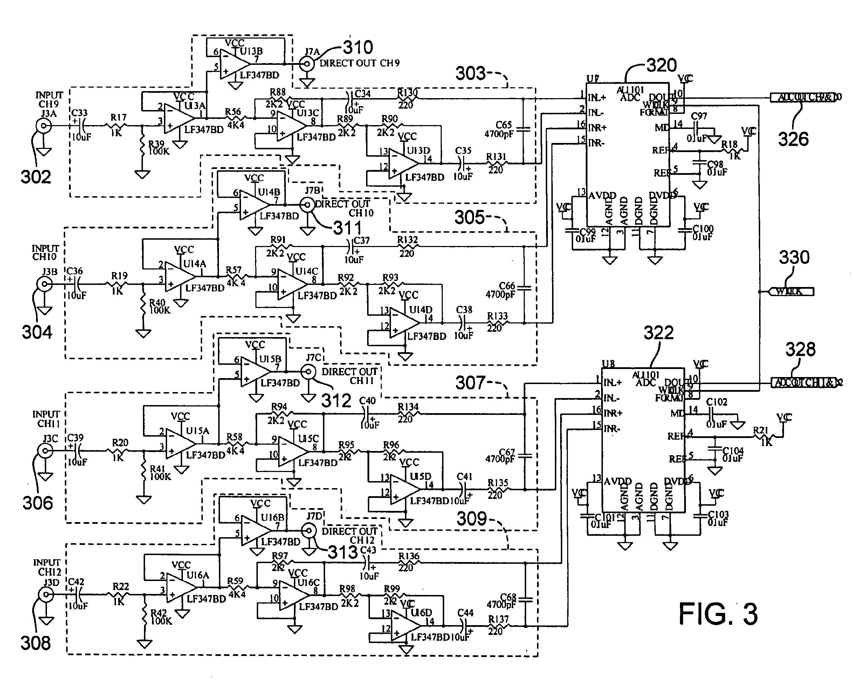

Referring to FIG. 3, a portion of a network hub is configured to receive audio signals from two stereo sources at a left source 1 (L1) input 302, a right source 1 (R1) input 304, a left source 2 (L2) input 306, and a right source 2 (R2) input 308. Alternatively, monophonic audio signals can be provided to one or more of these source inputs. The source inputs are connected to signal conditioners 303, 305, 307, 309 that process the audio input signals for delivery to respective direct outputs 310-313 as processed analog signals. In addition, processed audio signals from the L1 input 302 and the R1 input 304 are delivered as differential signals to an analog-to-digital converter 320, and processed audio signals from the L2 input 306 and the R2 input 308 are delivered as differential signals to an analog-to-digital converter 322. Corresponding digital signals are delivered to A-D outputs 326, 328, respectively. A word clock (WDCLK) input 330 is configured to receive a clock signal for synchronization of the digital audio output signals produced by the A-D converters 320, 322.

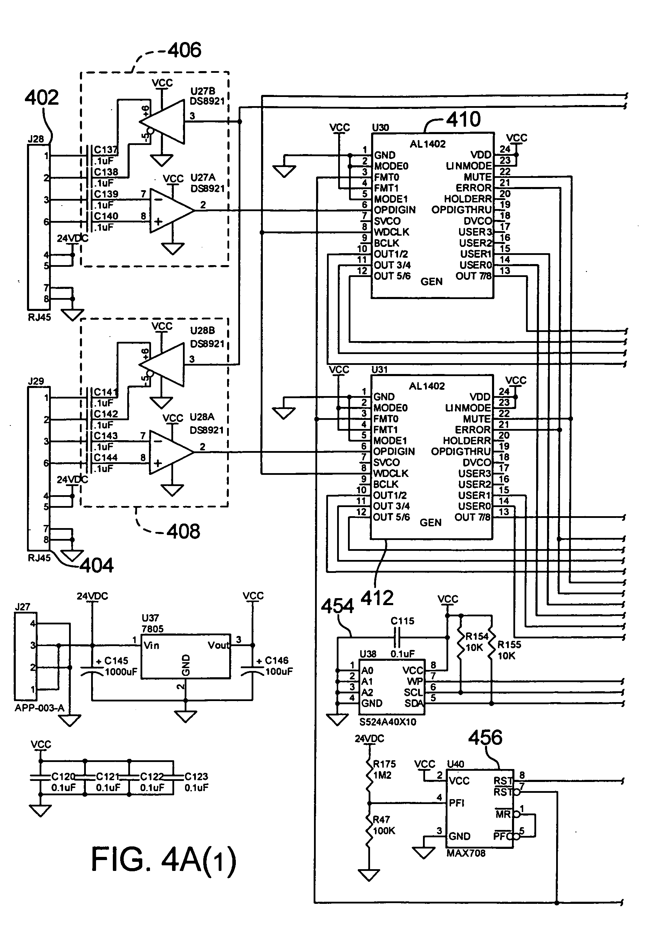

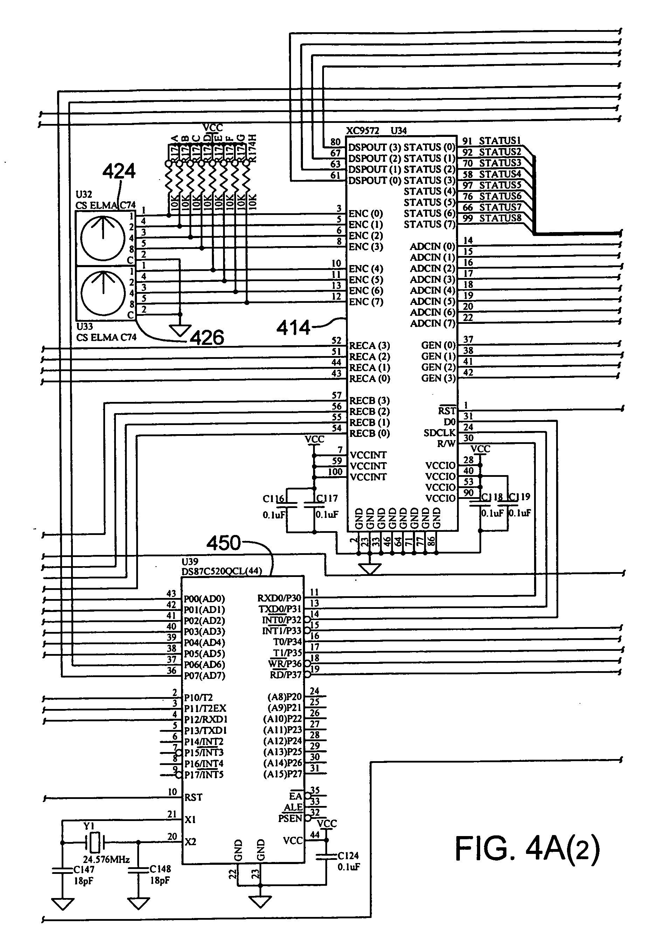

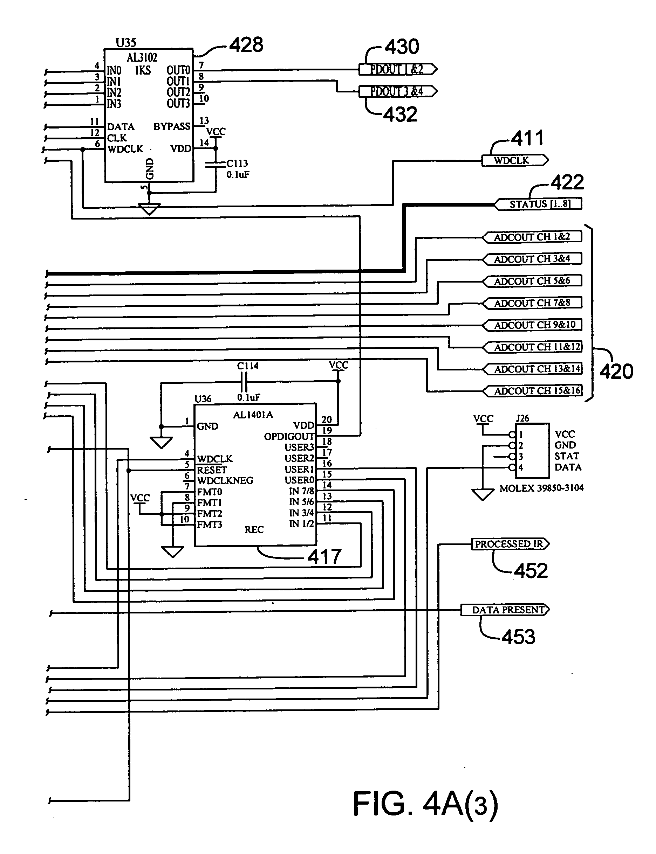

With reference to FIGS. 4A(1)-4A(3), a representative network hub includes input/output connectors 402, 404 configured to receive and transmit digital audio distribution network signals and deliver electrical power to other remote or local network elements. The I/O connectors 402, 404 are typically RJ45 connectors that are configured so that pin pairs 1, 2 are configured to output digital audio distribution network signals that include audio data for up to four stereo pairs and control data, pins 3, 6 are configured to receive a digital audio distribution network signal that includes digital audio data for up to four stereo pairs and control data, and pin pairs 4, 5 and 7, 8 are configured for DC power and ground, respectively. Digital audio distribution network signals are transmitted to and from the I/O connectors 402, 404 via respective signal conditioners 406, 408 and are delivered to respective digital audio decoders 410, 412 that are configured to produce up to four digital outputs corresponding to each of the stereo pairs presented to the I/O connectors 402, 404. The decoded digital audio signals are delivered to a complex programmable logic device (CPLD) 414 such as, for example, a XILINX XC9572 or other logic device. The digital audio decoder 410 is also configured to produce a clock signal (WDCLK) that is delivered to the digital audio decoder 412 and to a WDCLK output 411, but in other examples, the decoder 412 can be configured to produce a clock signal or a clock signal can be provided from another network component.

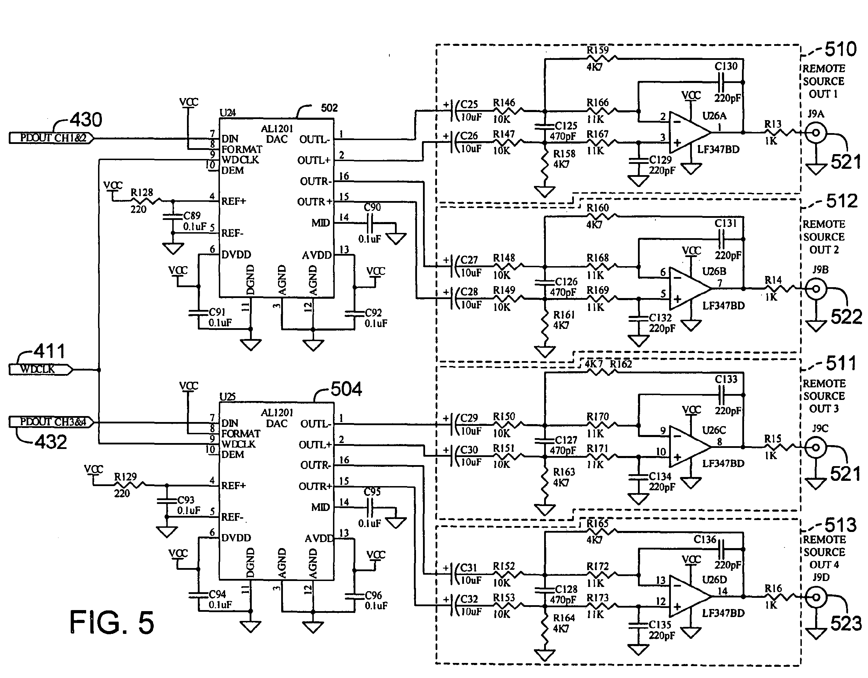

Digital stereo inputs 420 are configured to receive digital stereo signals produced by, for example, A/D converters as shown in FIG. 3. Such digital stereo signals are delivered to the CPLD 414 along with status signals for up to eight stereo channels received from one or more status signal inputs 422. Rotary encoders 424, 426 are configured to provide control signals to encoder inputs of the CPLD 414. The CPLD 414 is configured to deliver selected digital stereo signals to a digital signal processor (DSP) 428 that delivers processed digital audio signals to processed digital outputs (PDOUT) 430, 432. Referring to FIG. 5, the processed digital outputs are in communication with respective D-A converters 502, 504 that produce associated left channel and right channel analog audio signals. The left channel audio signals are delivered to signal conditioners 510, 511 and output connectors 520, 521, and the right channel audio signals are delivered to signal conditioners 512, 513 and output connectors 522, 523.

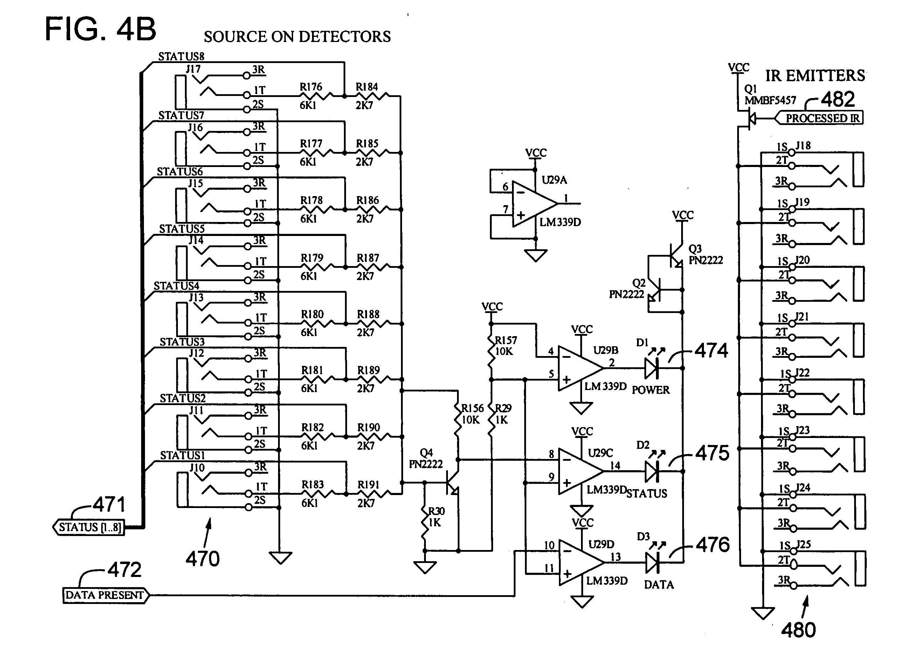

Referring again to FIG. 4, a microprocessor 450 is configured to receive control data extracted from an input digital audio distribution network signal by the audio decoders 410, 412. This control data is generally associated with IR remote control signals and is processed for delivery to a processed IR output 452. The audio decoders 410, 412 also communicate with a Data Present output 453 to indicate that a digital audio distribution network signal is available for decoding. The microcontroller 450 is configured to selectively provide a mute signal to the decoders 410, 412 based on control data extracted from the digital audio distribution network signal or otherwise provided. The microprocessor is also configured to communicate with and control signal processing by the DSP 428. An EEPROM 454 is in communication with the microprocessor 450, and a power conditioner 456 is also provided. An encoder 417 is configured to combine digital audio signals received from the CPLD 414 with control data for delivery as a digital audio distribution signal to pins 1, 2 of connector 404.

With reference to FIG. 4B, set 470 on input connectors is configured to receive signals associated with a power on/power off condition of up to eight audio sources. A status output (STATUS[1..8]) 471 is configured to deliver associated status signals to, for example, the CPLD 414. Based on the power on/off signals and a data present signal delivered to a DATA PRESENT input 472, LEDS 474-476 are turned on. A processed IR input receives a processed IR signal for delivery to a set 480 of connectors for delivery to IR repeaters that can be situated to deliver IR signals to, for example, IR remote control inputs of one or more audio sources.

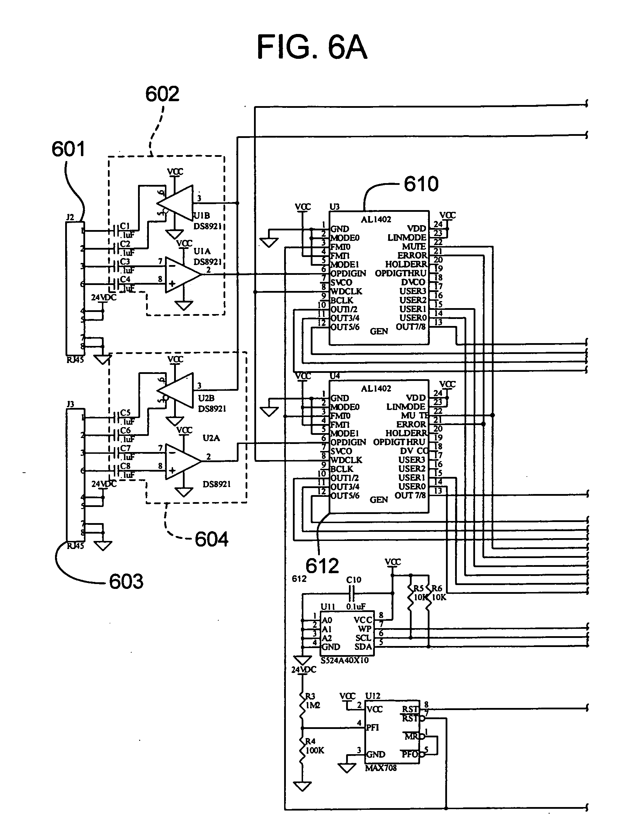

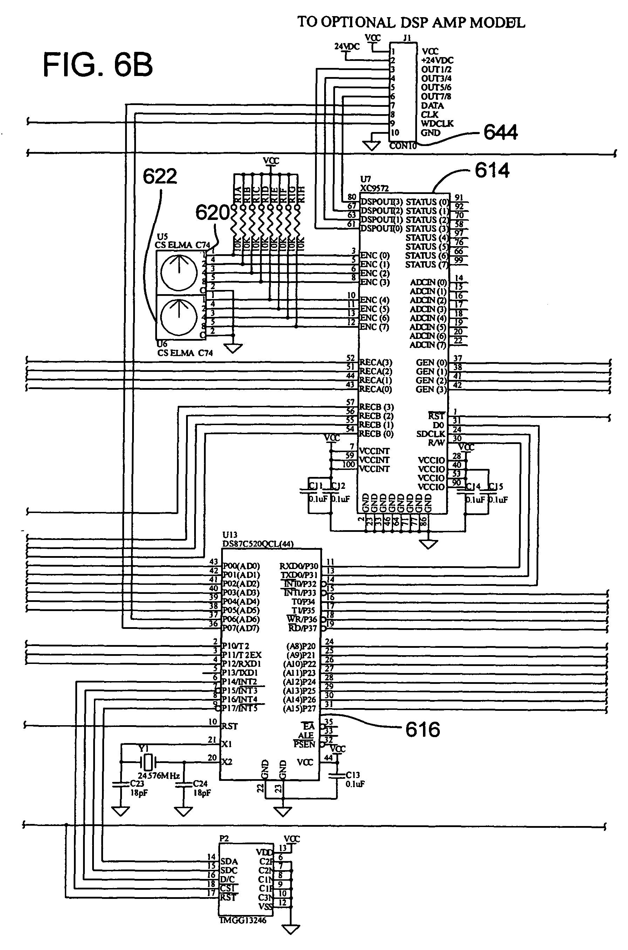

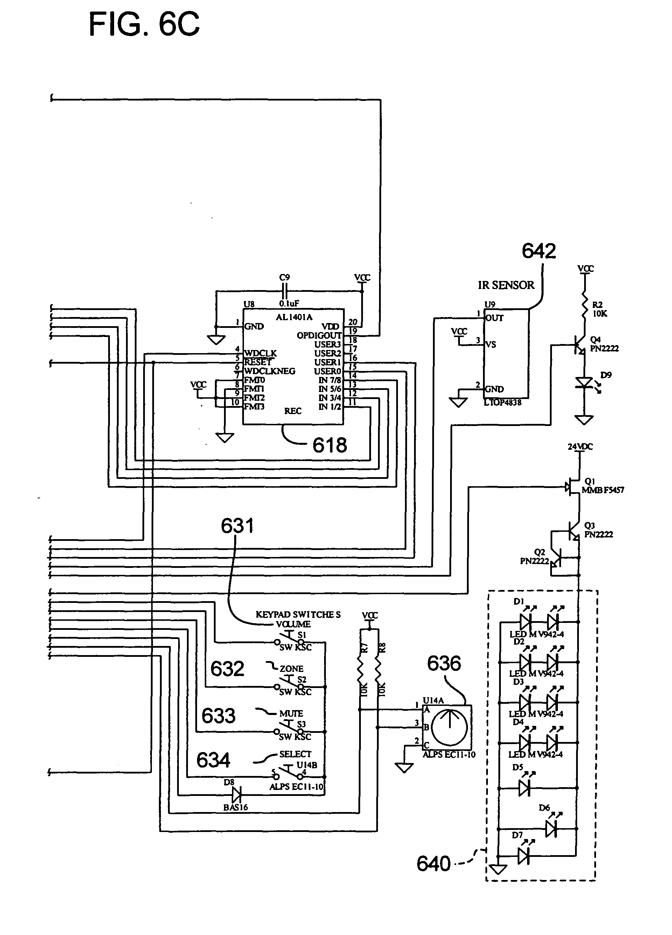

Referring to FIGS. 6A-6C, a network keypad 600 includes audio signal conditioners 602, 604 and respective audio decoders 610, 612 that are in communication with respective input/output connectors 601, 603. Decoded digital audio (typically as a combined left/right digital signal) is delivered to a CPLD 614 and control data is delivered to a microprocessor 616. An audio encoder 618 is configured to deliver a digital audio distribution signal to the signal conditioners 602, 604 and to the connectors 601, 603. Audio data can be selected for inclusion the output signal using encoders 620, 622. Keypad switches 631, 632, 633, 634 are configured for control of audio volume, selection of a particular zone, muting, and source selection, respectively. An encoder 636 is configured for selection of zones or audio sources, or other audio network features. The microprocessor 616 is configured to deliver a processed IR control signal to an LED array 640 that is used to, for example, communicate infrared remote control signals to one or more audio sources. These control signals are typically based on conventional infrared remote control signal protocols. The microprocessor is also in communication with an IR sensor 642 that is configured to receive IR control signals from an IR remote controller and transmit associated electrical control signals. A connector 644 can be provided for communication with a DSP module.

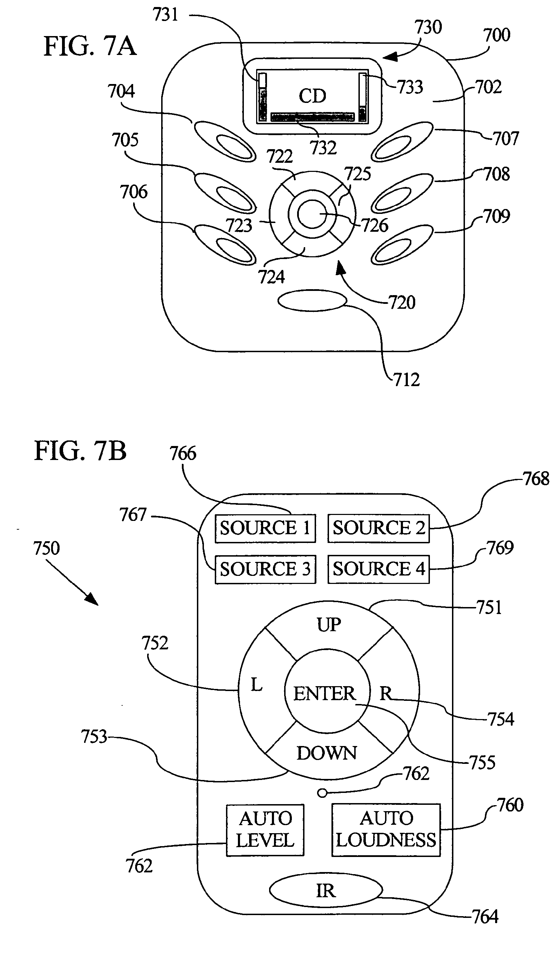

With reference to FIG. 7, a keypad-based controller 700 includes an LCD display, typically a 128 by 64 back or side illuminated LCD. The controller 700 typically includes two IDC, RJ45, or other connectors for Cat5/Cat5e cable for connection to a DAD network, and is configured to receive electrical power from, for example, four of the eight conductors available in a Cat5 cable. The controller 700 is configured to fit into a standard 2-gang electrical workbox and includes a cover 702 that can be attached to the workbox with clips, screws, or other mounting mechanisms. The controller 700 is also configured to receive an amplifier module to power speakers as well.

The controller 700 includes user perimeter input buttons 704-709 and central input buttons 722-726. The input buttons can be configured to select listening sources, name the sources, define the routing of sources, set parametric equalization and auto-leveling compression and limiting, as well as adjust volume and balance in a local listening area (a local zone) or in remote zones. A display unit 730 includes a display area configured to display source names or other data, and regions 731-733 configured to display audio power, balance, tuner signal strength and other audio network and audio source information. The controller 700 is generally configured so that switching between audio sources produces a default audio volume level, typically -30 dB, unless an auto level function is activated so that audio output level is unchanged. If the input buttons are unused for a predetermined time such as, for example, 10 seconds, a currently selected audio source name is displayed such as CD, DVD, tuner etc. on the display 730. The controller 700 also includes an IR input 712.

With reference to FIG. 7B, an alternative representative controller 750 includes general purpose input buttons 751-755 as well as illuminated buttons 762, 764 associated with selection of auto audio leveling and loudness, respectively. Pressing such buttons toggles the corresponding function from on to off or off to on. If the function is active, the associated button can remain illuminated. Source selection buttons 766-769 permit selection of a source for audio delivery or assignment of configuration parameters. These buttons function similarly to the input buttons 751-755.

Controllers such as the representative controllers 700, 750 can be used as follows. For example, in response to pressing and holding an "ENTER" button for 1 sec., messages such as "Press UP and DOWN buttons to adjust Volume" or "Press LEFT and RIGHT buttons to adjust balance" are presented on a display. Pressing a "SOURCE" button allows an installer or user to select a source and assign the source to multiple destinations and create a zone from these destinations. The display can present messages such as, for example, "Use the UP / DOWN buttons to select a source," "Use the RIGHT / LEFT buttons to select destinations" and "Press ENTER to link source/destination." A selected input button can be designated as, for example, an "Auto Volume" button to adjust all audio sources to produce a similar volume in a selected zone or zones, or a "Remote Off" button to turn off a remote input from an I/O module in a selected zone. Transmission from selected I/O Modules in other zones can also be inhibited. One or more of the input buttons can serve as a menu button for user selection of functions such as equalization adjustments and assignment of names to rooms and zones as well as configuring zones. An IR sensor in a controller is configured to receive IR commands from a remote control for transmission over the network back to one or more source components, as well as commands associated with volume control or balance in one or more zones, zone muting, and switching a zone or the system on or off.

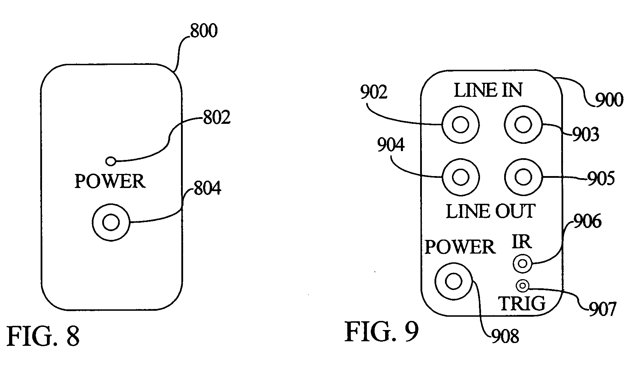

With reference to FIG. 8, a power module 800 is configured for connection to a digital audio distribution network using IDC, RJ45, or other connectors and CAT-5 or CAT-5e cable, or other cables. The power module 800 also includes a coaxial or other input connector to receive supplemental power from an external power source (not shown in FIG. 8). The power module 800 includes a green LED indicator 802 configured to indicate that an additional power supply connected to the power module 800 is providing power. Supplemental power is provided to the network using selected conductors in the CAT-5 or other cable. The power module 800 is typically included in a network installation to compensate power losses produced by, for example, power distribution over system cables. The power module 800 also provides, for example, 24-bit, 48 kHz digital audio transmission. In a particular example, the power module 800 is configured to receive 24 V DC from the supplemental power source. The power module 800 is conveniently configured for mounting in a conventional electrical box. In other examples, a power module includes an internal power supply. The power module can be configured to act as a hub as well, and can include IR sensors, D-A or A-D converters, DSP, and other functions.

With reference to FIG. 9, an input/output (I/O) module 900 for a DAD network includes a connector configured to receive a CAT-5 or CAT-5e cable. The I/O module 900 also includes left and right stereo inputs 902, 903 configured to receive an analog signal from a remote source, typically a source located in a zone associated with the I/O module 900. The I/O module 900 includes a digital audio processor that is configured to convert the analog signal to a corresponding digital signal that can be included in a digital audio network distribution signal that is transmitted to other zones. The I/O module 900 also includes left and right channel stereo outputs 904, 905 configured for delivery of an audio signal associated with a selected source to a local amplifier (i.e., an amplifier associated with a selected zone) or directly to speakers or headphones. The inputs and outputs can be configured to use so-called RCA connectors or other types of connectors. A power supply input connector 908 is also provided if additional electrical power is needed due to, for example, a large number of DAD network components and an associated large power demand, or power losses associated with deliver of power to the I/O module 900 via long cable lengths. The I/O module 900 also includes a connector 910 (e.g., a 3.5 mm phone jack) to deliver a control signal to an IR emitter for control of a source in the local zone from a remote zone. A similar connector 912 is configured as a 2 V trigger input to receive a signal from a local signal source that indicates that the local signal source is operational. Data associated with the trigger input is included in the digital audio network distribution signal that is transmitted by the I/O module 900. For convenience, the I/O module 900 can be configured to fit in a standard electrical box. The I/O module 900 can also include a DSP or other processor, one or more internal audio sources, or be configured to receive digital audio directly from one or more audio sources.

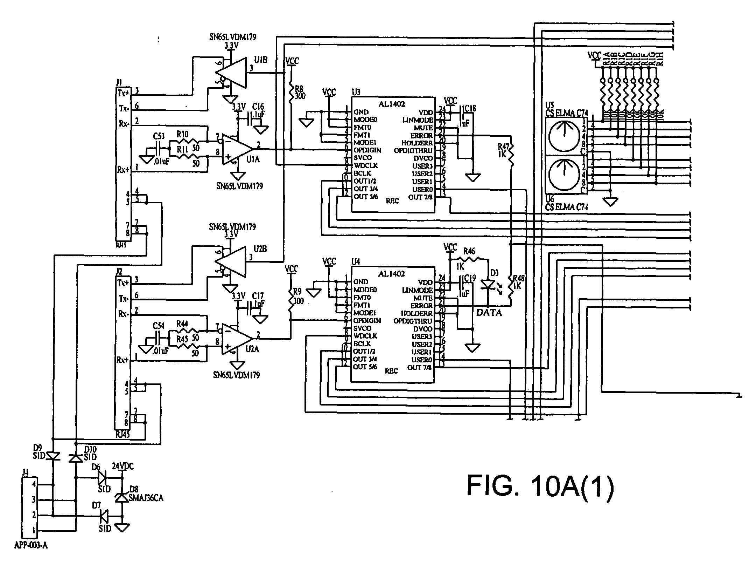

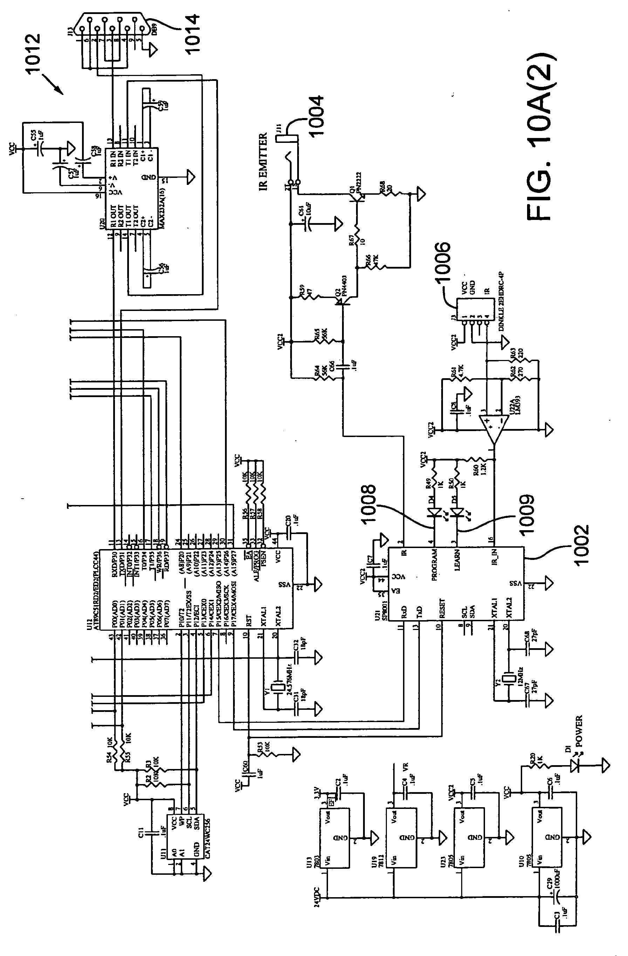

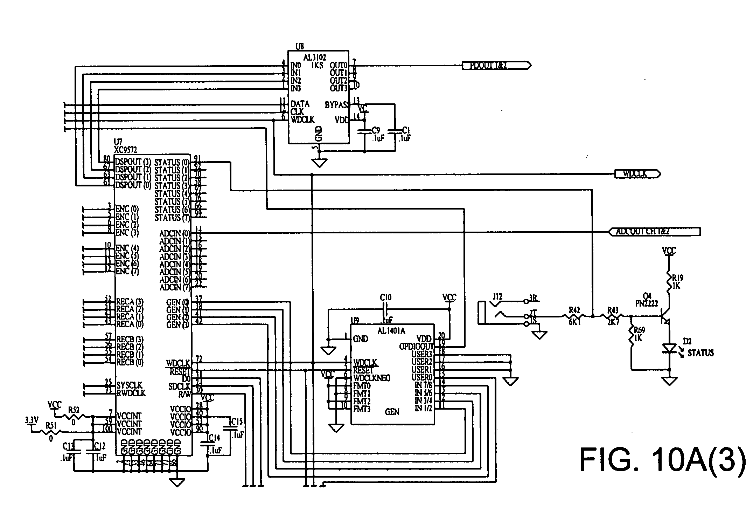

Another example of a user control module is illustrated in FIGS. 10A(1)-A(3). The user control module is similar to that shown in FIGS. 6A-6C, but includes a processor 1002 configured to communicate with an IR emitter and an IR detector via a jack 1004 and a connector 1006, respectively. The processor can be, for example, an SP8001 Serial Port Remote Control Integrated Circuit with "Learning" produced by Innotech Systems Inc. Such a processor includes a library of remote control codes for remote controls made by many manufacturers and can be operated to acquire or "learn" additional codes that can be associated with activation of various keys/buttons on a remote control. In addition, such a processor can be configured to automatically search for a correct code. In addition, such a processor can store three digit ("ISI") codes for several devices. The processor 1002 also includes outputs associated with LEDs 1008, 1009 for evaluating progress in learning codes. In a particular example, a code is learned by providing a button code for a virtual button to be associated with a code and the code to be learned is directed from a remote control to an IR detector and to the processor 1002. Confirmation that the code is learned is obtained by monitoring the LEDs 1008, 1009. With such a processor, commands associated with arbitrary remote control codes can be implemented without hardware modification. The user control module (or a network hub or other network element) can recognize control codes received via IR, wireless, or otherwise and convert or translate control codes for control of a selected device such as a program source or a network element. Such a processor can be associated with other network elements such as network hubs or input/output modules or other network locations. Some commands can be executed directly at the user control module (volume changes, muting) while other commands are directed to other network locations. For example, a command associated with a pause function is directed to the program source to be paused. In another example, a command is associated with selection of a different program source, and execution of such a command can be based on selection of particular audio data from a digital audio data distribution signal, without communication with the program source. In some cases, the digital audio data signal does not include the selected program material, and the command is directed appropriately in the network.

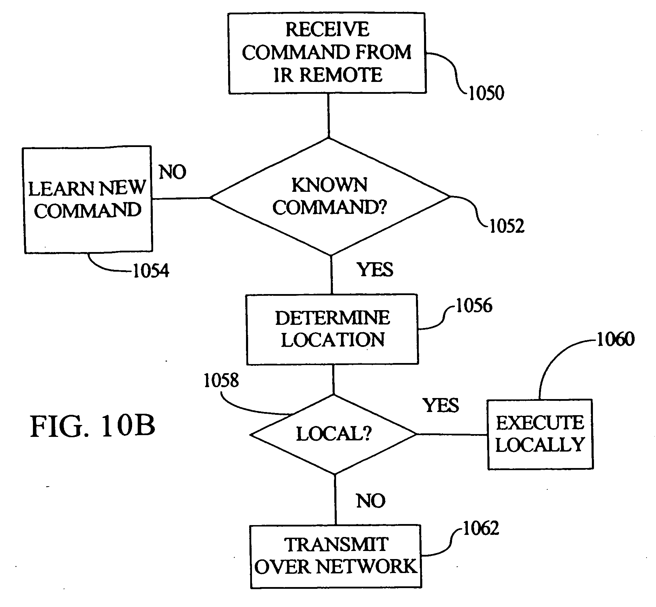

FIG. 10B illustrates processing of a command received by a control module from a remote control such as an IR remote. In a step 1050, a command is received and in a step 1052 the command is checked to determine if the command is a known command. If the command is not recognized as a known command, an error can be posted or control passed to a command learning procedure 1054. If the command is recognized, the command can be evaluated to determine if the command can be executed by the control module in a step 1056. If a "local" command is received, the command is executed in a step 1060. Otherwise, the command is distributed by the network in a step 1062 to other network locations in the digital audio data for execution at an appropriate location.

The user control module of FIG. 10A also includes a serial interface 1012 that can be configured to receive or transmit network configuration parameters such as, for example, program source information, equalization settings, zone definitions, or other settings. The serial interface 1012 can be implemented based on, for example, RS-232, universal serial bus, FIREWIRE (IEEE 1394), or other communication protocol. As shown in FIG. 10A, serial output is delivered to and receive from a DB9 connector 1014. Using the serial interface 1012, network settings can be stored, evaluated, or copied to duplicate a particular network configuration. In addition, the serial interface 1012 can be used for communication with an additional touch panel controller, a personal computer, a personal digital assistant, or other control system. Such a control system can include a display that permits visual presentation of the network configuration and network parameters. The serial interface 1012 can also be configured to communicate with a touch panel controller using a wireless interface. In addition, the serial interface 1012 can be used to reprogram or update an installed network to, for example, learn additional commands or to add additional features such as room monitoring, door chime functionality, or a security system interface if not provided at installation. The serial interface 1012 can also be used to establish a remote connection to the network using, for example, a phone line and a modem for remote control, repair, and evaluation. Alternatively, the serial interface 1012 can be configured to communicate over the Internet.

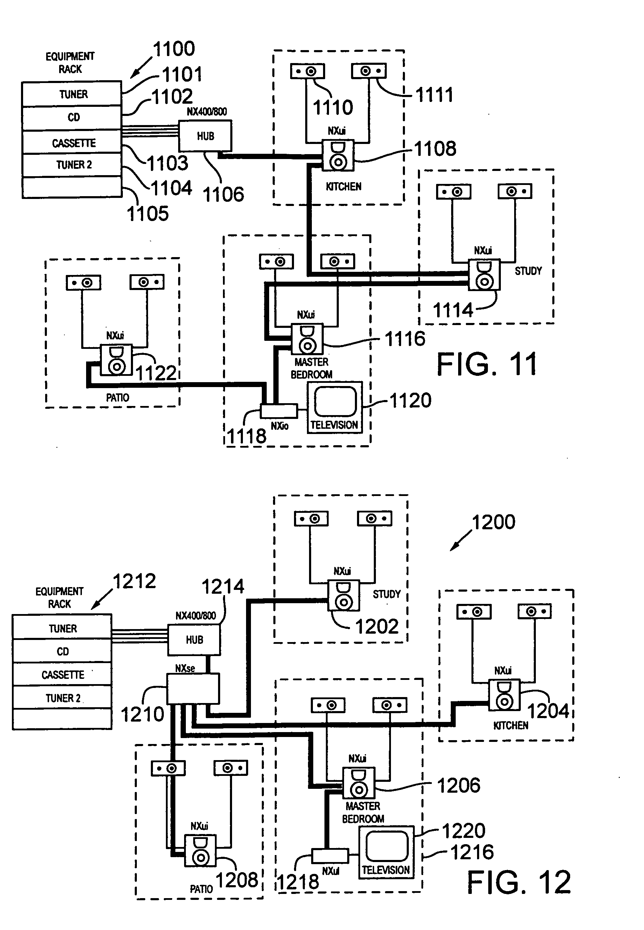

In other examples, audio distribution systems can be configured to distribute audio program material or other program material to one or more zones that can be configured as one or more rooms or other regions in a user's residence or business, or other location. As noted above, program material can be situated in one or more zones and made available to all zones or to selected zones, and while a central location for generation of source material can be used, such a location is not necessary. A system can be arranged in a point-to-point configuration (a "daisy chain") or in a star configuration. A typical point-to-point configuration is illustrated in FIG. 11. An equipment rack 1100 includes various program sources such as a first tuner 1101, a CD player 1102, a cassette player/recorder 1103, a second tuner 1104, and a slot 1105 for an additional source. Analog audio signals from these program sources are delivered to a hub 1106 that is in communication with a user interface module 1108 situated in, for example, a kitchen. The user interface module 1108 is typically configured to control program material delivered to speakers 1110, 1111 and to receive and transmit digital data to/from the hub 1106 and a user interface 1114 situated in a study or other room or zone. Digital data is communicated between the user interface 1114 and a user interface 1116 situated in master bedroom or other zone. The user interface 1116 is in communication with an input/output unit 1118 that is configured to communicate analog program material to and from a television 1120. The input/output unit is in communication with a user interface 1122 situated at a patio or other zone or location. As shown in FIG. 11, each zone/room includes speakers that a configured to receive analog program material from the associated user interface. Category 5e cable and RJ45 connectors are typically used to interconnect the user interface modules and input/output modules, but other types of cables can be used, or one or more of the system modules can include a wireless interface so that cables are not needed. In addition to program material, command, control, and program information can be communicated from zone to zone or room to room in the digital audio data signal. Typically each of the digital network components (such as, for example, input/output modules, user interfaces, or hubs) can be associated with a device identifier that can be set with, for example, one or more encoder wheels.

With reference to FIG. 12, a digital audio network 1200 arranged in a star configuration includes user interface modules 1202, 1204, 1206, 1208 that are in communication with an expansion module 1210. The expansion module 1210 is in communication with a hub 1214 and a set of program material sources 1212. As shown in FIG. 12, each user interface module is associated with a single user location (patio, bedroom, study etc.), but in other examples, one or more user interface modules can be associated with a collection of rooms or other locations that form a zone. A master bedroom zone 1216 include an input/output module 1218 to, for example, communicate an audio portion of television programming to the network 1200 or to supply audio programming from, for example, any of the set of sources 1212 to a television 1220.

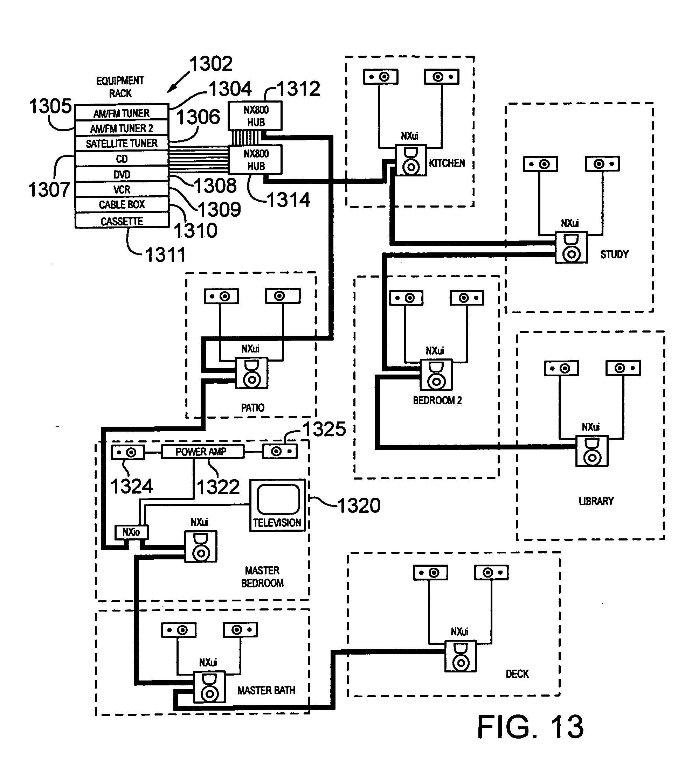

FIG. 13 illustrates another example network that includes an equipment rack 1302 configured to retain, for example, AM/FM tuners 1304, 1305, a satellite tuner 1306, CD and DVD players/recorders 1307, 1308, a videocassette recorder 1309, a cable television box 1310, and a cassette player/recorder 1311. Hubs 1312, 1314 are configured for distribution to respective point-to-point networks. Zone 1320 includes a power amplifier 1322 that processes analog audio signals for delivery to speakers 1324, 1325.

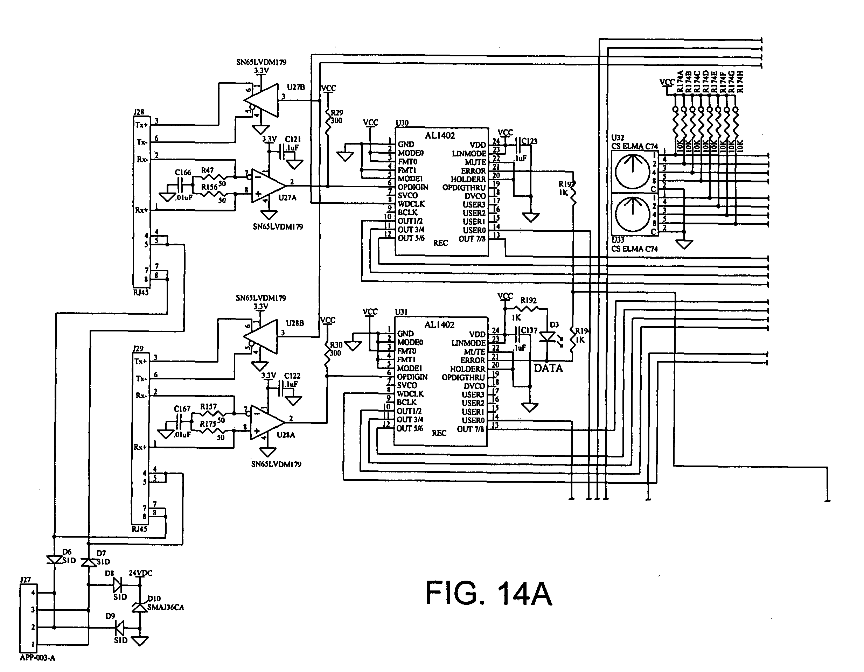

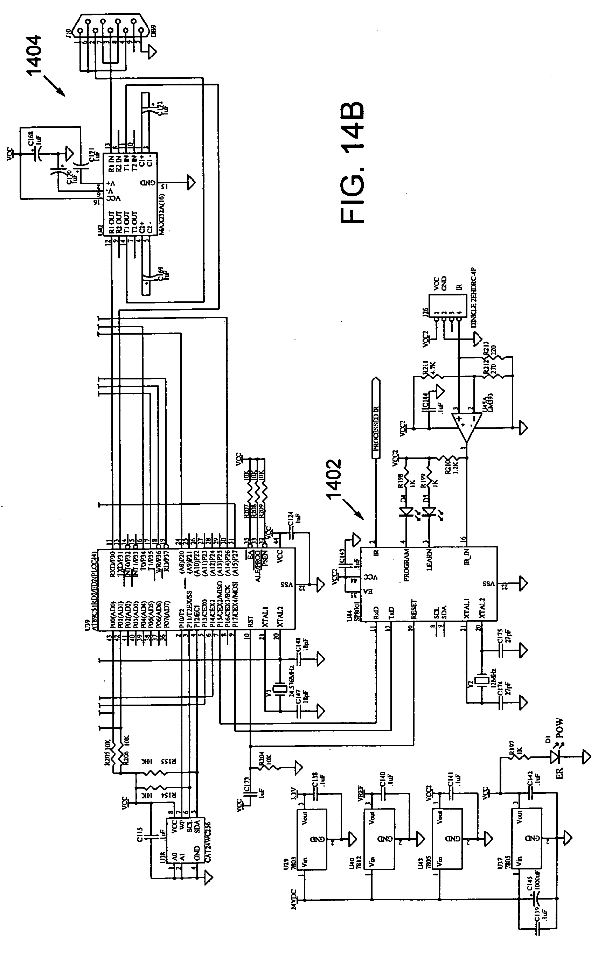

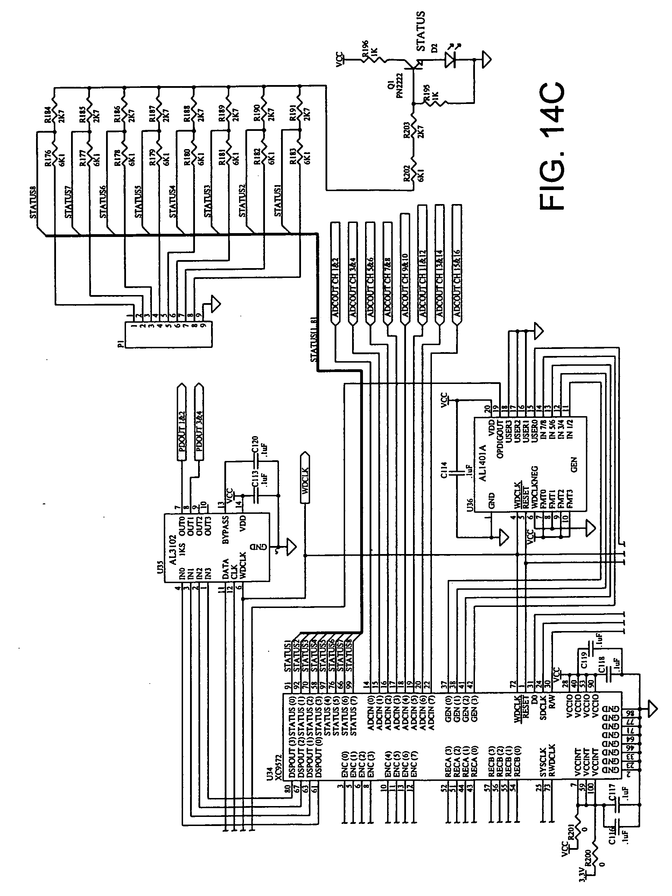

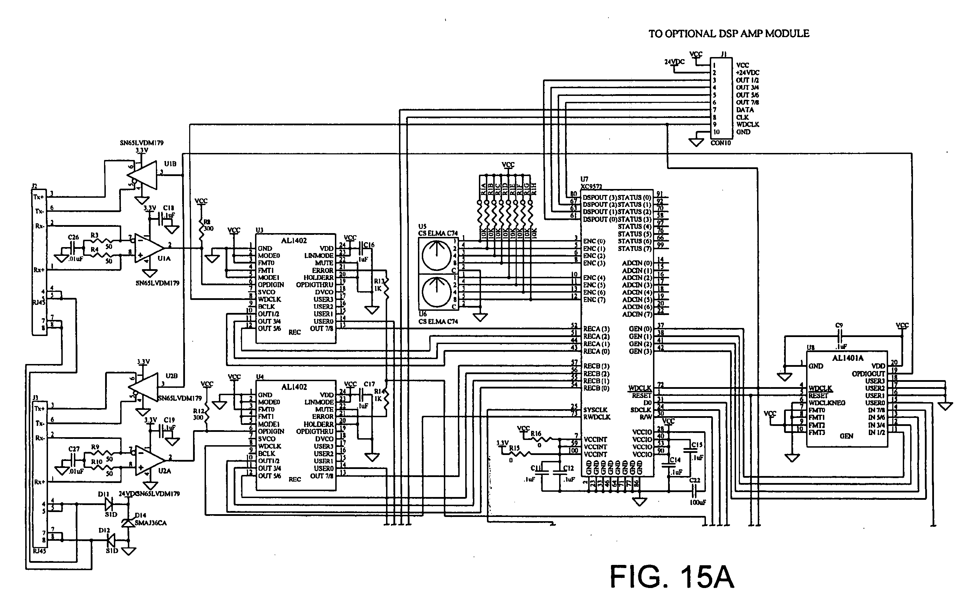

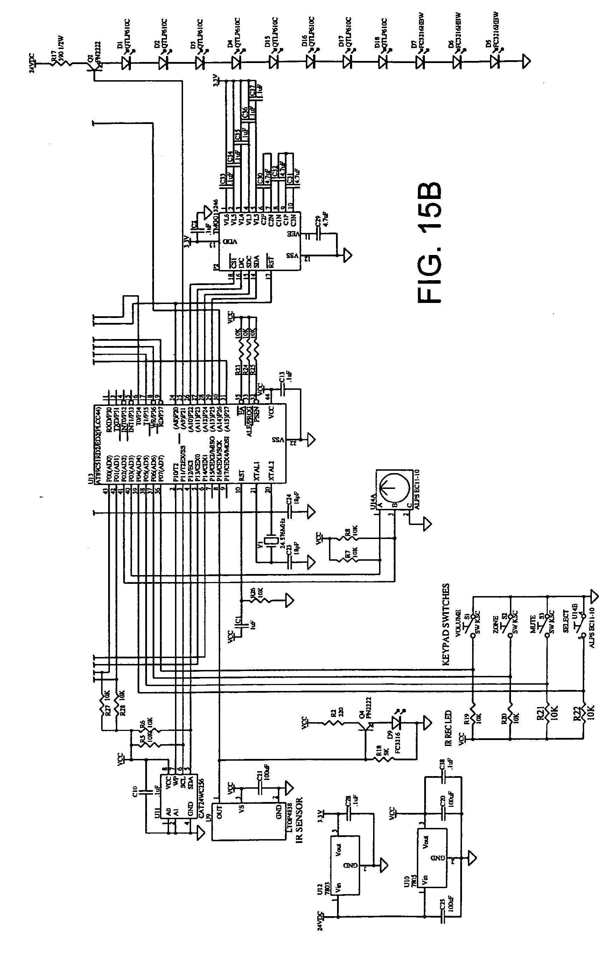

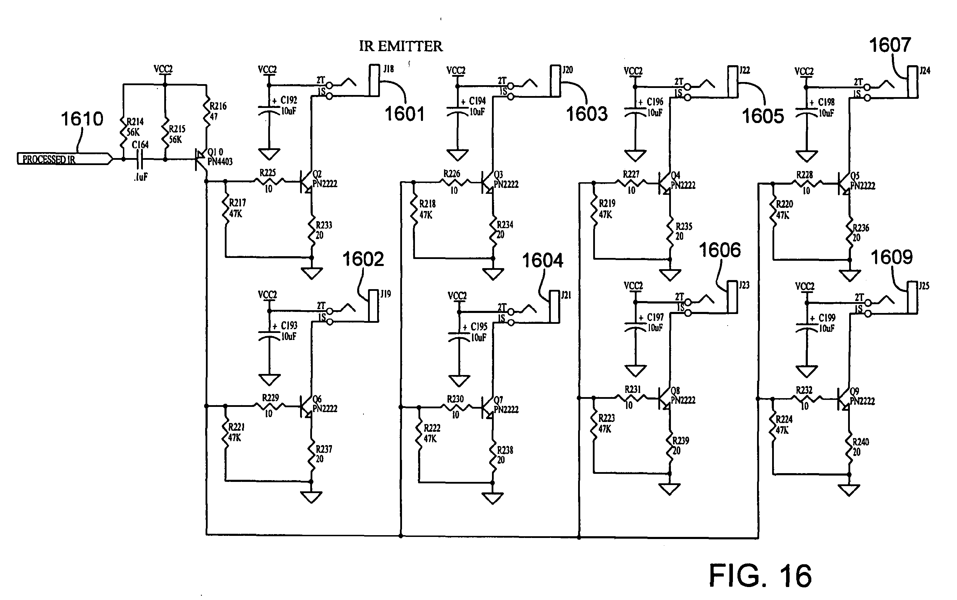

Other configurations of network components include a hub that includes a processor 1402 configured to learn remote control commands and a serial interface 1404 as shown in FIGS. 14A-14C. FIGS. 15A-15B illustrates an additional keypad controller configuration. FIG. 16 illustrates an IR output module that includes jacks 1601-1608 configured to communicate IR emitter drive signals based on processed IR received at an input 1610. In the above examples, any zone can typically be configured to receive and transmit control data to, for example, control remote program sources (e.g., turn on or off a CD player in another room, or select an FM channel at a remote tuner) or to control the network (e.g., select parameters for audio processing, or select audio sources for delivery to a selected zone). Control data is conveniently provided using infra-red emitting diodes and detectors, and an IR remote in one zone can select and control program material delivery in other zones.

Typically, network components and modules are interconnected using so-called Cat 5 or similar cables using RJ45 connectors. These components and modules are configured so that crossover cables are unnecessary, and all network cables can be configured as "straight-through" cables.

User interface modules can be conveniently arranged as wall mounted key pads with an LCD or other display that is configured to show, for example, the source currently being played, other available sources, equalization and loudness settings, volume, tone and other settings. In addition, a user interface can be configured to show a source material identifier such as a performer or song name and this information included in a digital audio data distribution signal. The user interface module can also be configured to indicate user preferences for tone, equalization, loudness etc. as a function of volume or other parameter. Typically a user interface module is configured to receive an amplifier module so that the user interface can directly drive one or more speakers. Amplifier power is typically received at the user interface module via the associated Cat 5 cable. In addition, user interface modules are generally configured to include a "last source recall" so that upon activation of a single button, a recently played source is returned to a previous configuration. For example, a particular FM station can be selected via "one touch" and played with previous volume, tone, equalization, or other parameters. In addition, a user interface module can be configured so that audio levels associated with all or a selected number of program sources are played at a common audio level.

Other system modules include power input modules to provide additional power, system expanders, and infrared (IR) repeaters configured to reproduce IR commands sent from remote zones to a program material source. An IR repeater is typically configured to be situated at an IR receiver at the program source.

For some program sources, program material details such as composer, performer, selection length, playlists, or other details are available, and such information can be provided in the digital audio distribution signal. For example, program information concerning channel selection and current program material obtained from a satellite tuner can be distributed. In addition, text messages can be distributed.

Only selected specific examples of audio networks and the use of these networks is described herein, but it will be apparent that such networks permit users to conveniently select, process, control, and deliver audio signals from one or more sources to one or more destinations or zone. For example, a user located in a first zone can direct a command to an IR remote to select a remote audio source for audio delivery to the first zone (or other zones), and control the audio source by selecting, for example, CD track, FM tuner frequency, or other audio source configuration. A network hub in the first zone is response to the IR remote, and processes a remote control command for the network. In some cases, the remote control command is relayed to the audio source or other destination. For example, selection of an audio source is based on network hub configuration, while audio source control (e.g., initiating playing of a CD or selecting a CD track) is based on delivery of a command to an audio source.

In the examples above, examples of particular network elements have been described with respect to associated network functions. However, any network element can be configured as a network controller or a user input device, and can serve as a hub. Such assignments of functionality to particular network elements in the examples is for convenience in explanation only. In addition, in the examples, digital audio distribution signals are transmitted and received on respective assigned pairs of an 8-conductor cable while the remaining four conductors are used to provide electrical power. In other examples, signals and power can be arranged on additional or fewer conductors, and the used of 8-conductor CAT-5 cable is for convenience only. In addition, analog or other signals associated with audio, video or other media can be transmitted or received using some cable conductors. In some examples, system functions are implemented in hardware or software, but generally functions can be implemented in any combination of hardware and software, or using only hardware or software. In other examples, program parameters can be stored at some or all distribution points. For example, parameters for functions such as automatic loudness control can be stored for frequently used or favorite sources and distribution zones. Thus, it will be apparent that the examples described above can be modified in arrangement and detail without departing from the scope of the disclosure. We claim all that is encompassed by the appended claims.

## Claims

**1.** A digital audio network, comprising:
a hub configured to receive a plurality of stereo signals and combine the stereo audio signals with control data to produce a digital audio network signal; and
an output connector configured to communicate the digital audio distribution signal; and
an interface configured to communicate at least one network parameter.

**2.** The digital audio network of claim 1, wherein the hub is configured to include program material information in the digital audio distribution signal.

**3.** The digital audio network of claim 1, wherein the output connector is configured to deliver the digital audio distribution signal to a pair of conductors.

**4.** The digital audio network of claim 1, further comprising an interface configured to communicate at least one network parameter.

**5.** The digital audio network of claim 1, wherein the output connector is configured to deliver the digital audio distribution signal to a first pair of conductors in a CAT-5 cable, and to deliver electrical power to at least a second pair of conductors in the CAT-5 cable.

**6.** The digital audio network of claim 1, further comprising an input connector configured to receive a digital audio distribution signal.

**7.** The digital audio network of claim 1, further comprising a remote control processor configured to process remote control commands.

**8.** The digital audio network of claim 1, further comprising a display configured to present program material information.

**9.** A controller for a digital audio network, comprising:
a keypad configured for entry of at least one audio source identifier or a configuration parameter for at least one audio zone;
an audio processor configured to receive an input digital audio network distribution signal that includes digital audio data and control data, and produce an output digital audio network distribution signal based on the entry of the at least one audio source identifier or configuration parameter; and
a serial interface configure to communicate at least one of the at least one audio source identifier or the configuration parameter for the at least one zone.

**10.** The controller of claim 9, further comprising a display configured to display the at least one audio source identifier or configuration parameter.

**11.** The controller of claim 9, further comprising a remote control processor configured to identify an unknown remote control command and to indicate entry into a command acquisition mode.

**12.** The controller of claim 11, wherein the audio processor is configured to include the control data associated with the unknown remote control command into the output digital audio network distribution signal after command acquisition.

**13.** An audio network device, comprising:
an infrared sensor configured to receive a remote control command;
a control data processor that includes an indicator configured to indicate if the received remote control command is undefined and acquire an associated command definition; and
an audio processor configured to produce a digital audio distribution signal based on the command definition.

**14.** The audio network device of claim 13, further comprising:
an input configured to receive at least one audio input signal, wherein the processor is configured to produce a digital audio signal based on the input audio signal and the digital audio distribution signal is based on the digital audio signal.

**15.** The audio network device of claim 14, further comprising a user input configured to select at least one audio signal to be decoded from the digital audio distribution signal.

**16.** The audio network device of claim 14, further comprising an interface configured to communicate at least one network parameter.

**17.** The audio network device of claim 16, wherein the interface is a serial interface.

**18.** An audio distribution method, comprising:
receiving at least one audio signal from an audio signal source;
digitizing the at least one audio signal to produce a digital audio signal; and
combining the digital audio signal with control data received from a remote control to produce a digital audio distribution signal.

**19.** The audio distribution method of claim 18, further comprising identifying a command received from a remote control as a new command.

**20.** The audio distribution method of claim 19, further comprising associating a network function with the new command.

**21.** An audio distribution method, comprising:
receiving a plurality of digital audio signals;
receiving control data;
determining a location for execution of a command associated with at least a portion of the control data; and
producing a digital audio distribution signal based on a combination of selected digital audio signals and the command location.

**22.** The method of claim 21, further comprising executing a command associated with the control data without inclusion of the command in the digital audio distribution signal.

**23.** The method of claim 21, further comprising including the command in the digital audio distribution signal.

**25.** The method of claim 22, wherein the control data is associated with at least one of volume, loudness, equalization, balance, or muting.
